# EUROPEAN PATENT APPLICATION

(11) **EP 4 583 021 A1**
(43) Date of publication of application: **09.07.2025**
(21) Application number: 22953619.8
(22) Date of filing: 05.08.2022
(51) Int. Cl.: G06Q 10/00, G05B 19/418

(54) **ELECTRONIC DEVICE CLOUD MANAGEMENT SYSTEM**

(71) Applicant: Sin Chang Hun Industry Co., Ltd, Taiwan (TW)
(72) Inventor: LI, Wei-husn, Zhangshu, Changhua County (TW)
(74) Representative: Lang, Christian
(86) International application number: PCT/CN2022/110447
(87) International publication number: WO 2024/026810

(57) **Abstract**

A cloud management system of electronic devices contains: an external import server, an information analysis module, a power database management module, a peripheral device database management module, and an application equipment database management module. The external import server is connected to at least one sensor information collection module in a network transmission manner. The information analysis module is connected to the external import server, the power database management module, the peripheral device database management module and the application equipment database management module. The power database management module is connected to the data analysis module. The peripheral device database management module is connected to the data analysis module to classify and store the peripheral device data. The application equipment database management module is connected to the data analysis module so that the application equipment data sent by the data analysis module is classified and stored.

## Description

### TECHNICAL FIELD

The present invention relates to a cloud management system of electronic devices, and more particularly to a management platform for managing the battery status and vehicle condition of public electric bicycles, public electric motorcycles or public electric vehicles and for connecting to other application systems.

### BACKGROUND

Public electric bicycles are a type of lightweight transportation vehicle that applies batteries as its main energy source. At present, most public electric bicycles are managed by parking the bicycles on parking poles and using the connection devices on the parking poles to obtain the battery power or usage status of the bicycles.

However, most operators will find management problems as follows:
1) To manage the status of public electric bicycles (such as battery power, tire pressure, or power system, peripheral equipment of public electric bicycles, application equipment of public electric bicycles and other information), operators must invite dedicated power management personnel to establish relevant management databases, which is not only time-consuming but also wastes manpower.
2) After careful understanding, you will find that the current ways of managing and storing data by the industry are similar. It can also be confirmed that repeated development and management of databases results in a waste of manpower, resources and establishment time.

The present invention has arisen to mitigate and/or obviate the aforedescribed disadvantages.

### SUMMARY

The primary aspect of the present invention is to provide a cloud management system of electronic devices which is capable of providing operators with rapid management and storage of the public electric bicycles, the management status of peripheral modules, and application device-related information
To obtain above-mentioned aspect, a cloud management system of electronic devices provided by the present invention contains: an external import server, an information analysis module, a power database management module, a peripheral device database management module, and an application equipment database management module.

The external import server is connected to at least one sensor information collection module in a network transmission manner, and the at least one sensor information collection module collects data used by various manufacturers on public electric bicycles and related equipment and sends the data to the external import server.

The information analysis module is connected to the external import server, the power database management module, the peripheral device database management module and the application equipment database management module, and the information analysis module analyzes the data sent by the external import server to generate a power system data, a peripheral device data and an application equipment data.

The power database management module is connected to the data analysis module, and the power system data sent by the data analysis module is classified and stored. The power system data includes a speed data, a motor running data, a display data, and a battery storage data.

The peripheral device database management module is connected to the data analysis module to classify and store the peripheral device data sent by the data analysis module, and the peripheral device data includes sensor information used in the public electric bicycles, facial recognition information, voice recognition information, and lamp usage information.

The application equipment database management module is connected to the data analysis module so that the application equipment data sent by the data analysis module is classified and stored. The application equipment data includes charging station operation information, fast charging station operation information, battery exchange station operation information, locking pile operation information, power station information, and energy storage station information.

Preferably, the cloud management system further contains a data export module. After the data export module is connected to the external import server, the power system data, the peripheral device data and the application equipment data are extracted from the information analysis module based on using requirements.

Preferably, the power database management module includes a control system data, a speed shift system control data, and a vehicle steering control data.

Preferably, the peripheral device data also includes wireless signal usage information.

Accordingly, by using the cloud management system of the electronic devices of the present invention, the operator does not need to develop a management database by himself. He only needs to send the monitored data to the external import server by using the sensor information collection module installed on the public electric bicycle or the peripheral equipment. Then, the data analysis module analyzes the imported data and stores it in the power database management module, the peripheral device database management module and the application equipment database management module based on the classification of various data, thus avoiding a system launch delay in order to develop the database.When desiring to retrieve data, the power system data, the peripheral device data and the application equipment data are easily retrieved via the data export module. In addition, a lot of data is storable and convertible on different platforms.

### BRIEF DESCRIPTION OF THE DRAWINGS

FIG. 1 is a schematic view showing the assembly of a cloud management system of electronic devices according to a preferred embodiment of the present invention.
FIG. 2 is a schematic view showing the operation of the sensor information collection module of the cloud management system of the electronic devices according to the preferred embodiment of the present invention.
FIG. 3 is a schematic view showing the operation of the information analysis module of the cloud management system of the electronic devices according to the preferred embodiment of the present invention.
FIG. 4 is another schematic view showing the operation of the information analysis module of the cloud management system of the electronic devices according to the preferred embodiment of the present invention.
FIG. 5 is also another schematic view showing the operation of the information analysis module of the cloud management system of the electronic devices according to the preferred embodiment of the present invention.
FIG. 6 is still another schematic view showing the operation of the information analysis module of the cloud management system of the electronic devices according to the preferred embodiment of the present invention.
FIG. 7 is a schematic view showing the operation of the data export module of the cloud management system of the electronic devices according to the preferred embodiment of the present invention.

### DETAILED DESCRIPTION

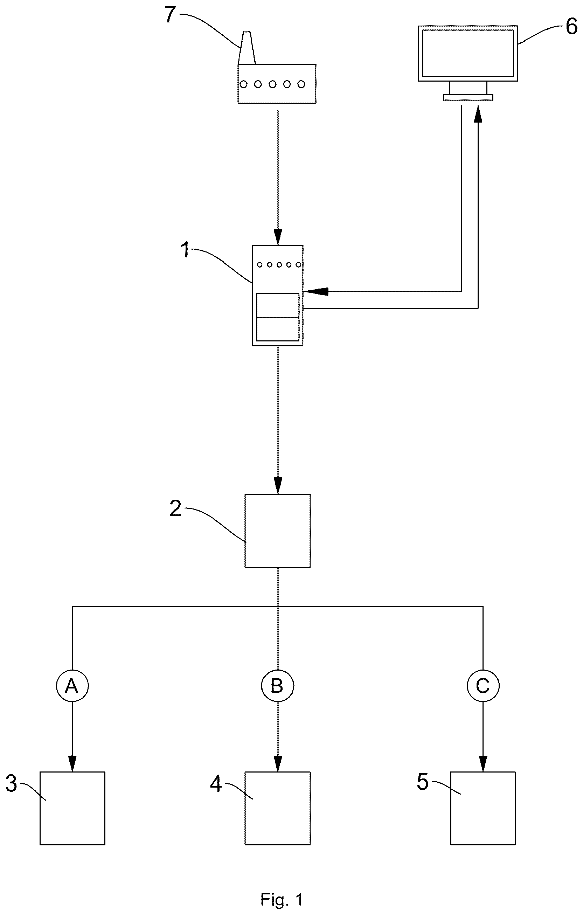

With reference to FIG. 1, a cloud management system of electronic devices according to a preferred embodiment of the present invention comprises: an external import server 1, an information analysis module 2, a power database management module 3, a peripheral device database management module 4, an application equipment database management module 5, and a data export module 6.

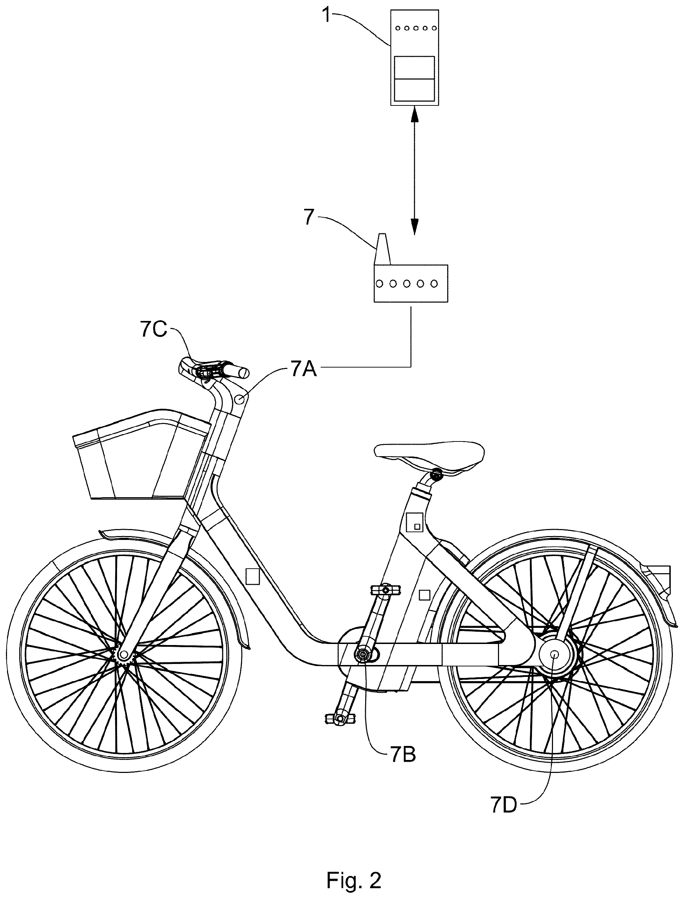

Referring to FIGS. 1 and 2, an operator installs multiple sensor sets 7A, 7B, 7C and 7D on public electric bicycles and related equipment of the public electric bicycles, and the collected data are sent through the multiple sensor sets 7A, 7B, 7C and 7D which are provided on a rental website to the external import server 1 in a wired network transmission manner or in a wireless network transmission manner, which is not limited here. It is noted that the operator directly uploads the collected data to the cloud management system of the electronic device, such that there is no need to send the data to the operator's operating server first, thus saving a resource space and accelerating a transmission of the data.

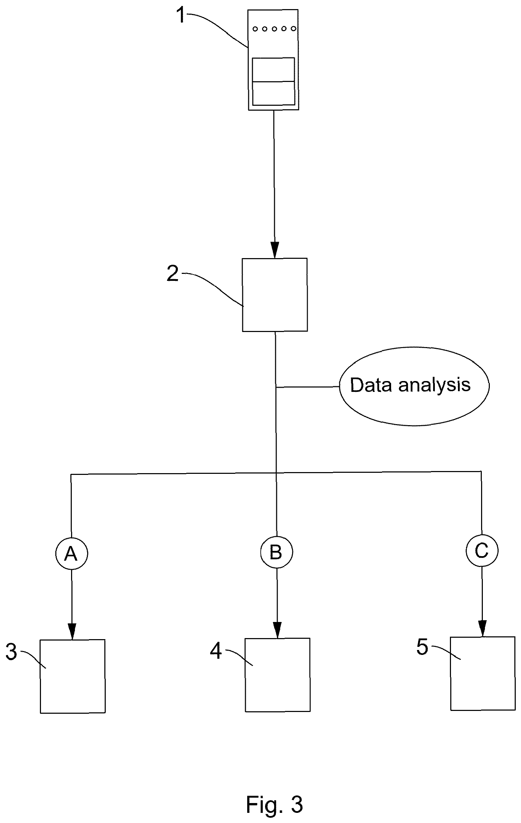

As shown in FIGS. 1-3, the information analysis module 2 is connected to the external import server 1, the power database management module 3, the peripheral device database management module 4, the application equipment database management module 5 and the data export module 6. The information analysis module 2 analyzes the data sent by the external import server 1 to generate a power system data A, a peripheral device data B and an application equipment data C.

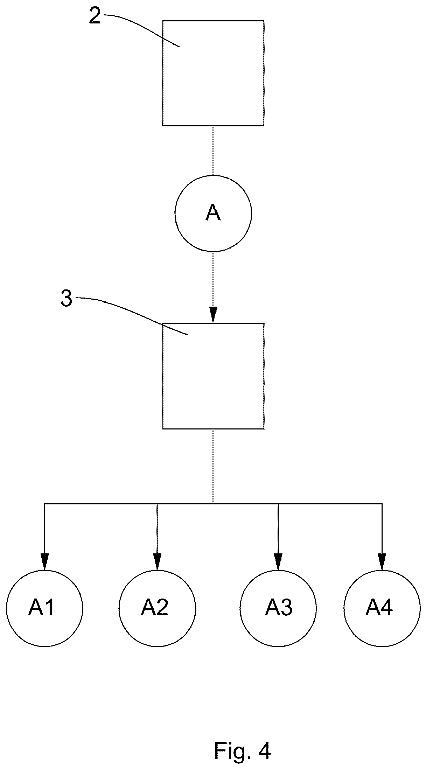

As illustrated in FIG. 4, the power database management module 3 is connected to the data analysis module 2, and the power system data A sent by the data analysis module 2 is classified and stored, wherein the power system data A includes a speed data A1, a motor running data A2, a display data A3, and a battery storage data A4 when the bicycle is in use. Also, the power database management module 3 includes a control system data (such as ABS, TCS), a speed shift system control data, and a vehicle steering control data. These data provides reference for the operator and the research and development direction to the public electric bicycles (such as mountain bikes, road bikes, and trail bikes).

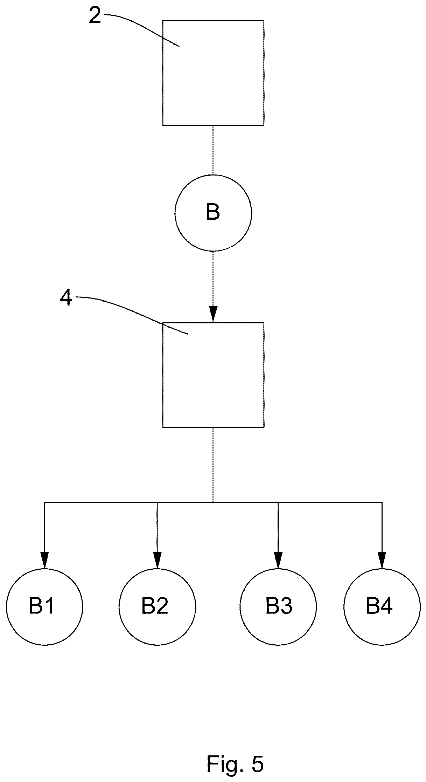

With reference to FIG. 5, the peripheral device database management module 4 is connected to the data analysis module 2 to classify and store the peripheral device data B sent by the data analysis module 2. The peripheral device data B includes sensor information B1 used in the public electric bicycles, facial recognition information B2, voice recognition information B3, and lamp usage information B4. In another embodiment, when the electronic devices are equipped with a transmitter, the peripheral device data B also includes wireless signal usage information (such as 4G signals, 5G signals, Bluetooth signals, or RFID/NFC signals).

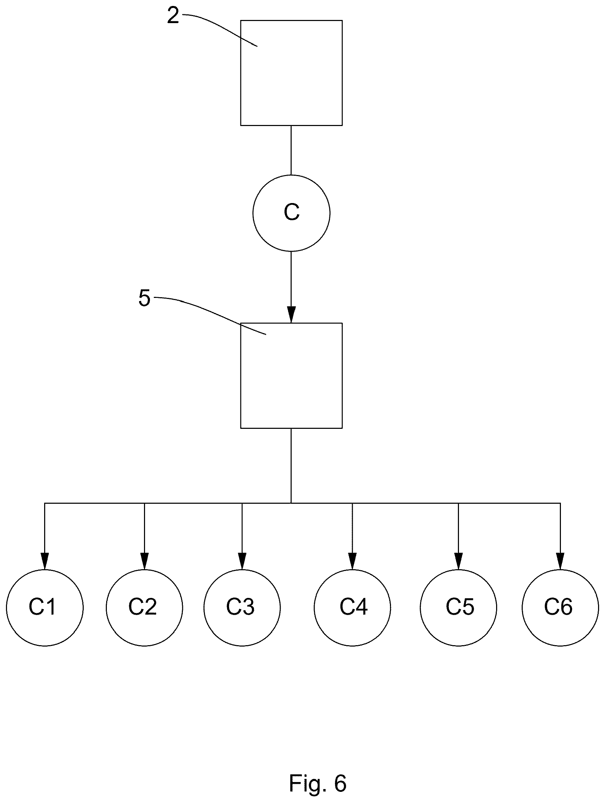

Referring to FIG. 6, the application equipment database management module 5 is connected to the data analysis module 2 so that the application equipment data C sent by the data analysis module 2 is classified and stored, wherein the application equipment data C includes charging station operation information C1, fast charging station operation information C2, battery exchange station operation information C3, locking pile operation information C4, power station information C5, and energy storage station information C.

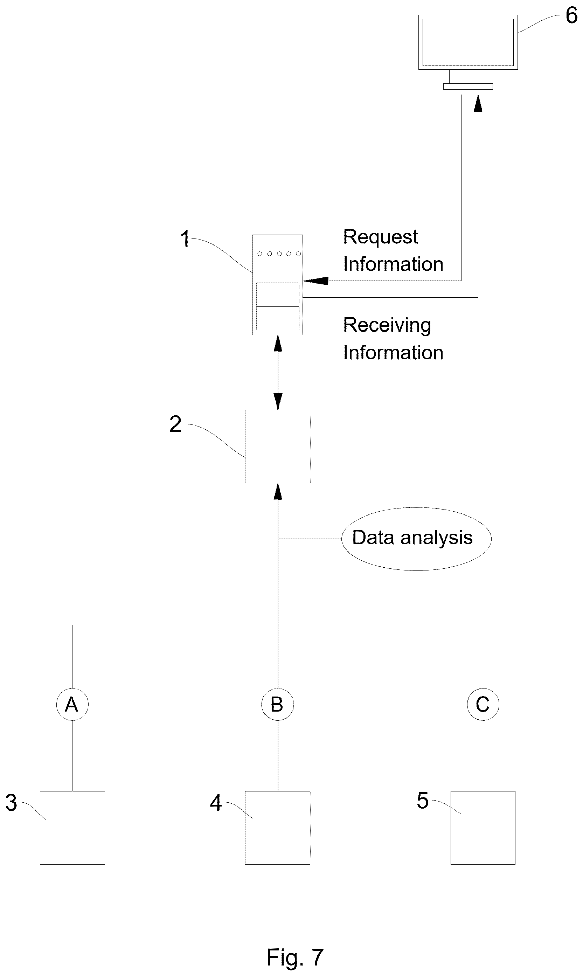

As shown in FIG. 7, after the data export module 6 is connected to the external import server 1, the power system data A, the peripheral device data B and the application equipment data C are extracted from the information analysis module 2 based on using requirements.

Accordingly, the cloud management system of the electronic devices of the present invention has advantages as follows:
1) As shown in FIG. 1, the operator installs the multiple sensor sets 7A to 7D on the public electric bicycle and the related equipment so as to monitor the speed data, the motor running data, the display data, and the battery storage data during use. In addition, the control system data, the speed shift system control data, the vehicle steering control data, the facial recognition information, the voice recognition information, and the lamp usage information B4 are monitored. When the user returns the public electric bicycle after use, the multiple sensor sets 7A collect, aggregate, and send the collected information to the external import server 1 via a rental website. Furthermore, the multiple sensor sets 7A are mounted on a rental station to monitor the charging station operation information, the fast charging station operation information, the battery exchange station operation information, the locking pile operation information, the power station information, and the energy storage station information C.
2) As illustrated in FIGS. 1 and 2, the external import server 1 sends the data provided by a sensor information collection module 7 to the data analysis module 2 for analysis. The data analysis module 2 analyzes the data provided by various sensors. For example, the multiple sensor sets 7A send 17 kilometers of the data per hour so that the data analysis module 2 learns that this is the power system data, and then the data is sent to the power database management module 3 for storage. When the data is voice information, the data analysis module 2 learns that the data is used as the peripheral module usage information and is sent to the peripheral device database management module 4 for storage. If there is car rental or car return information for the lock pile, the data analysis module 2 learns that this is activity information of application equipment, and then the information is passed to the application equipment database management module 5 for storage. Therefore, the data sent from the sensor information collection module 7 does not need to be manually analyzed and processed, thus saving labor and resources.
3) When the operator is desired to access data, the data export module 6 is set on the operator's side and is connected to the external import server 1 via the Internet to submit the required data. Thereafter, the data analysis module 2 provides the power system data A, the peripheral device data B and the application equipment data C.
4) By using the cloud management system of the electronic devices of the present invention, the operator does not need to develop a management database by himself. He only needs to send the monitored data to the external import server 1 by using the sensor information collection module 7 installed on the public electric bicycle or the peripheral equipment. Then, the data analysis module 2 analyzes the imported data and stores it in the power database management module 3, the peripheral device database management module 4 and the application equipment database management module 5 based on the classification of various data, thus avoiding a system launch delay in order to develop the database.
5) When desiring to retrieve data, the power system data A, the peripheral device data B and the application equipment data C are easily retrieved via the data export module 6. In addition, a lot of data is storable and convertible on different platforms.

While the first embodiments of the invention have been set forth for the purpose of disclosure, modifications of the disclosed embodiments of the invention as well as other embodiments thereof may occur to those skilled in the art. The scope of the claims should not be limited by the first embodiments set forth in the examples, but should be given the broadest interpretation consistent with the description as a whole.

## Claims

1. A cloud management system of electronic devices comprising: an external import server, an information analysis module, a power database management module, a peripheral device database management module, and an application equipment database management module;
wherein the external import server is connected to at least one sensor information collection module in a network transmission manner, and the at least one sensor information collection module collects data used by various manufacturers on public electric bicycles and related equipment and sends the data to the external import server;
wherein the information analysis module is connected to the external import server, the power database management module, the peripheral device database management module and the application equipment database management module, and the information analysis module analyzes the data sent by the external import server to generate a power system data, a peripheral device data and an application equipment data;
wherein the power database management module is connected to the data analysis module, and the power system data sent by the data analysis module is classified and stored, wherein the power system data includes a speed data, a motor running data, a display data, and a battery storage data;
wherein the peripheral device database management module is connected to the data analysis module to classify and store the peripheral device data sent by the data analysis module, and the peripheral device data includes sensor information used in the public electric bicycles, facial recognition information, voice recognition information, and lamp usage information; and
the application equipment database management module is connected to the data analysis module so that the application equipment data sent by the data analysis module is classified and stored, wherein the application equipment data includes charging station operation information, fast charging station operation information, battery exchange station operation information, locking pile operation information, power station information, and energy storage station information.

2. The cloud management system as claimed in claim 1 further comprising a data export module, wherein after the data export module is connected to the external import server, the power system data, the peripheral device data and the application equipment data are extracted from the information analysis module 2 based on using requirements.

3. The cloud management system as claimed in claim 1, wherein the power database management module includes a control system data, a speed shift system control data, and a vehicle steering control data.

4. The cloud management system as claimed in claim 1, wherein the peripheral device data also includes wireless signal usage information.
